# EUROPÄISCHE PATENTSCHRIFT

(11) **EP 2 594 684 B1**
(45) Veröffentlichungstag und Bekanntmachung des Hinweises auf die Patenterteilung: **15.07.2015**
(21) Anmeldenummer: 13000509.3
(22) Anmeldetag: 01.02.2013
(51) Int. Cl.: A47L 15/00, A47L 15/42, D06F 39/08, D06F 39/00, D06F 33/02

(54) **Reinigungsgerät mit Abwassertank, Wärmepumpe und Temperatursensor**
Cleaning device with waste water tank, heat pump, and temperature sensor
Appareil de nettoyage avec réservoir pour eaux usées, pompe à chaleur et capteur de température

(43) Veröffentlichungstag der Anmeldung: 22.05.2013
(73) Patentinhaber: V-Zug AG, 6301 Zug (CH)
(72) Erfinder: Schellenberg, Guido, 5702 Niederlenz (CH)
(74) Vertreter: Sutter, Kurt

(56) Entgegenhaltungen:
- EP-A1- 2 224 049
- EP-A2- 2 206 824
- JP-A- 2012 254 207

## Beschreibung

### Gebiet der Erfindung

Die Erfindung betrifft ein Reinigungsgerät, insbesondere eine Waschmaschine oder einen Geschirrspüler, mit einem Bottich zur Aufnahme des zu reinigenden Guts und mit einem Abwassertank zum Zwischenspeichern von Abwasser aus dem Bottich. Weiter besitzt das Gerät eine Wärmepumpe, um dem Abwassertank Wärme zu entziehen und dem Prozesswasser im Bottich zuzuführen. Die Erfindung betrifft auch ein Verfahren zum Steuern eines solchen Geräts.

### Hintergrund

Ein derartiges Gerät in Form einer Haushaltwaschmaschine wird in EP 2 224 049 beschrieben. Es besitzt einen Bottich zur Aufnahme einer Trommel, in welcher die zu reinigende Wäsche untergebracht wird. Weiter ist ein Abwassertank vorgesehen, in welchem Prozesswasser aus dem Bottich vor dem Abführen zwischengelagert werden kann. Um dem Prozesswasser im Abwassertank Wärme zu entziehen, ist eine Wärmepumpe vorgesehen, mit welcher Wärme vom Abwassertank zum Prozesswasser im Bottich transferiert werden kann. Der Abwassertank wird soweit abgekühlt, dass ein Teil des Prozesswassers im Abwassertank gefriert. Die Laufzeit der Wärmepumpe wird aufgrund der am Abwassertank gemessenen Temperatur ermittelt: Wenn die Temperatur einen bestimmten Wert unterschreitet, der auf eine drohende vollständige Vereisung des Abwassertanks hinweist, wird die Wärmepumpe abgeschaltet. Eine solche vollständige Vereisung sollte vermieden werden, da ansonsten der Abwassertank nur schwer wieder aufzutauen ist.

### Darstellung der Erfindung

Es stellt sich die Aufgabe, eine Vorrichtung dieser Art und ein Verfahren zu deren Betrieb bereitzustellen, welche apparativ einfacher sind.

Entsprechend ist die Steuerung des Geräts also dazu ausgestaltet, mit dem Temperatursensor die Umgebungstemperatur zu bestimmen, aus der Umgebungstemperatur eine maximale Laufzeit der Wärmepumpe zu ermitteln und die Laufzeit der Wärmepumpe während des Waschprozesses auf die maximale Laufzeit zu beschränken. Da der Zeitpunkt der vollständigen Vereisung abhängig von der Umgebungstemperatur ist, kann dank der Bestimmung der Umgebungstemperatur also auf eine direkte Temperaturmessung am Abwassertank verzichtet werden.

Im erfindungsgemässen Betriebsverfahren des Reinigungsgeräts werden folgende Schritte durchlaufen:
- Ermitteln der Umgebungstemperatur: Hier kann es sich um eine direkte Messung der Umgebungstemperatur handeln, oder die Umgebungstemperatur kann indirekt bestimmt werden, z.B. aus einer Extrapolation des Abfalls der Gerätetemperatur seit dem vorangehenden Waschprozess.
- Ermitteln der maximalen Laufzeit der Wärmepumpe abhängig von der Umgebungstemperatur: Hierbei wird also die maximale Laufzeit als Funktion der Umgebungstemperatur ermittelt, z.B. aufgrund einer Tabelle oder Formel, die im Rahmen von Kalibrierungsmessungen des Gerätetyps bestimmt wurde.
- Entzug von Wärme aus dem Abwassertank (6) mittels der Wärmepumpe während einer Zeitdauer des Waschprozesses, wobei die Zeitdauer von der maximalen Laufzeit beschränkt wird.

Vorzugsweise ist die Steuerung dazu ausgestaltet, vor dem Waschprozess mindestens eine Temperatur zu messen und aus dieser Temperatur die Umgebungstemperatur zu bestimmen. Wie erwähnt, kann dies z.B. eine direkte Umgebungstemperaturmessung sein, oder die Umgebungstemperatur kann z.B. aus der numerischen Analyse der Abkühlung des Geräts nach dem letzten Waschprozess abgeleitet werden. Dies erlaubt es, die Bestimmung der Umgebungstemperatur zu einem Zeitpunkt durchzuführen, wenn das Gerät nicht aktiv beheizt wird. In diesem Zusammenhang ist der Ausdruck "vor dem Waschprozess" dahingehend zu verstehen, dass die Messung stattfindet, bevor mindestens 50% des Prozesswassers des ersten Waschgangs des Waschprozesses eingeführt ist, da sich etwa ab dann die Temperatur des Geräts aufgrund der Temperatur des Prozesswassers und/oder aufgrund des einsetzenden Heizprozesses wesentlich zu ändern beginnt.

Am oder im Abwassertank ist erfindungsgemäss kein Temperatursensor angeordnet.

Beispielsweise kann der Temperatursensor am Bottich oder am Sumpf angeordnet sein. In einer anderen vorteilhaften Ausführung kann der Temperatursensor an der Wärmepumpe angeordnet sein. In beiden Fällen kann der Temperatursensor dazu eingesetzt werden, einerseits die Umgebungstemperatur zu bestimmen (insbesondere durch Messung vor dem Waschprozess) und andererseits das Gerät während dem Waschprozess zu steuern.

Es ist auch möglich, die Signale mehrerer, an unterschiedlichen Orten angeordneter Temperatursensoren zu kombinieren, um so eine genauere Abschätzung der Umgebungstemperatur zu erhalten.

Vorteilhaft ist die Steuerung dazu ausgestaltet, die Laufzeit der Wärmepumpe abhängig davon festzulegen, wann das Prozesswasser seine Betriebstemperatur erreicht hat, soweit vorher nicht die aus der Umgebungstemperatur ermittelte maximale Laufzeit der Wärmepumpe erreicht wird.

Vorzugsweise ist die Steuerung dazu ausgestaltet, die maximale Laufzeit bei tieferer Umgebungstemperatur kleiner zu wählen als bei höherer Umgebungstemperatur. Mit anderen Worten ist die maximale Laufzeit tₘₐₓ(Tᵤ) eine Funktion der Umgebungstemperatur Tᵤ, wobei diese Funktion tₘₐₓ(Tᵤ) mindestens in einem gewissen Temperaturbereich, insbesondere mindestens zwischen 0°C < Tᵤ < 10°C, nicht konstant und monoton fallend ist.

In einer konkreten Variante kann die Steuerung dazu ausgestaltet sein,
- bei einer Umgebungstemperatur oberhalb einer Schwelltemperatur die Laufzeit abhängig davon festzulegen, wann das Prozesswasser die gewünschte Betriebstemperatur erreicht hat, und
- bei einer Umgebungstemperatur unterhalb der Schwelltemperatur die Laufzeit der Wärmepumpe durch die maximale Laufzeit zu beschränken.

Diese Schwelltemperatur liegt vorzugsweise in einem Bereich zwischen 3 und 6 °C, insbesondere zwischen 4 und 5 °C.

Die vorliegende Erfindung eignet sich besonders zum Einsatz in Waschmaschinen (Waschautomaten) oder Geschirrspülern, insbesondere zum Einsatz in Haushalts-Waschmaschinen oder Haushalts-Geschirrspülern.

### Kurze Beschreibung der Zeichnungen

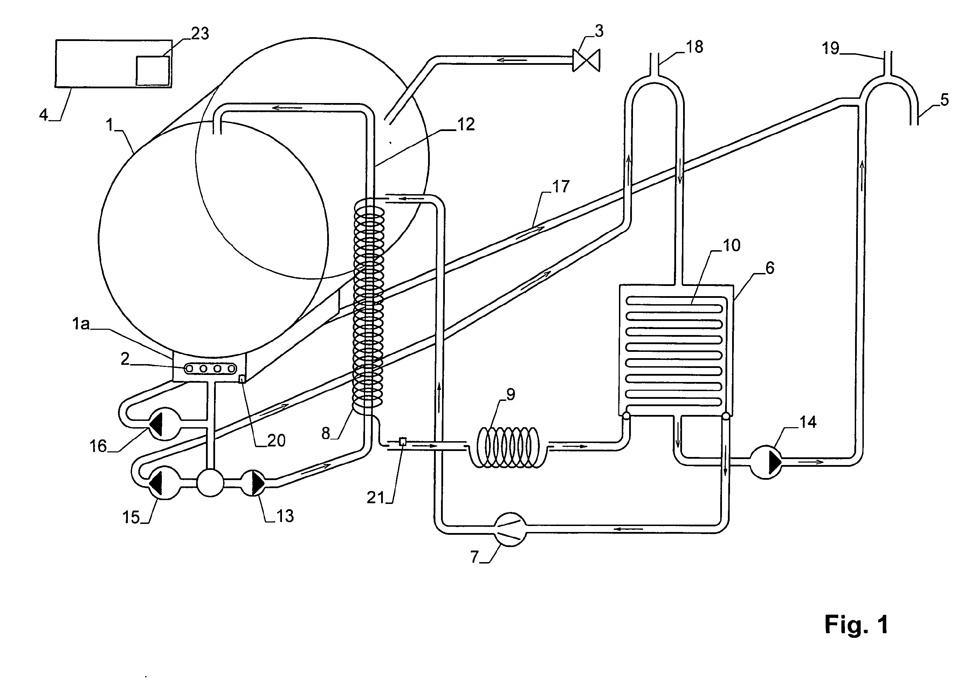

Weitere Ausgestaltungen, Vorteile und Anwendungen der Erfindung ergeben sich aus den abhängigen Ansprüchen und aus der nun folgenden Beschreibung anhand der Figur 1. Diese zeigt eine schematische Darstellung der Komponenten einer Waschmaschine.

### Wege zur Ausführung der Erfindung

### Geräteaufbau:

Die in Fig. 1 schematisch dargestellte Waschmaschine besitzt einen Bottich 1, in welchem in der Regel eine Trommel (nicht gezeigt) zur Aufnahme der zu waschenden Wäsche angeordnet ist. Unterhalb des Bottichs ist ein Sumpf 1a angeordnet, der mindestens einen Teil des Prozesswassers aufnimmt. Am Bottich 1 ist z.B. im Bereich des Sumpfs 1a (optional) eine elektrische Heizung 2 angeordnet, welche dazu dient, Prozesswasser elektrisch auf aufzuheizen. Weiter besitzt das Gerät in bekannter Weise einen Trommelantrieb, um die Trommel zu drehen. Eine Steuerung 4 kontrolliert und steuert die Operationen aller Komponenten. Ein derart ausgestaltetes Gerät ist dem Fachmann bekannt.

Frischwasser wird dem Gerät zur Verwendung als Prozesswasser über ein Frischwasserventil 3 zugeführt. Gebrauchtes Wasser wird in eine Abwasserleitung 5 abgepumpt. Auch diese Komponenten sind dem Fachmann grundsätzlich bekannt.

In der Ausführung nach Fig. 1 kann das Abwasser, d.h. das verbrauchte Prozesswasser, aus dem Bottich 1 über einen Abwassertank 6 geführt werden, bevor es zur Abwasserleitung 5 gelangt. Das Gerät besitzt weiter eine Wärmepumpe umfassend einen Kompressor 7, von welchem ein Wärmepumpenmedium zu einem Kondensator 8 gepumpt wird, wo unter Abgabe von Wärme eine Verflüssigung stattfindet. Vom Kondensator 8 gelangt das Medium über ein Drosselorgan 9 zu einem Verdampfer 10, wo das Medium unter Aufnahme von Wärme verdampft. Vom Verdampfer 10 läuft das Medium zurück zum Kompressor 7.

Das Drosselorgan 9 kann z.B. als Kapillare oder Expansionsventil ausgestaltet sein.

In der in Fig. 1 gezeigten Ausführung ist der Kondensator 8 an einer Zirkulationsleitung 12 angeordnet. Es ist eine Zirkulationspumpe 13 vorgesehen, um Prozesswasser vom Sumpf 1a durch die Zirkulationsleitung 12 in einen oberen Bereich des Bottichs 1 zu pumpen, wo es wieder in den Bottich 1 eingespritzt wird. Ist die Wärmepumpe im Betrieb, wird auf diese Weise dem Prozesswasser im Bottich Wärme zugeführt.

Es ist denkbar, den Kondensator 8 auch direkt am Bottich 1, am Sumpf 1a unterhalb des Bottichs oder an der Zirkulationspumpe 13 anzuordnen.

Der Verdampfer 10 ist thermisch mit dem Behälter 6 und somit mit dem sich im Behälter 6 befindlichen Abwasser gekoppelt. Er kann innerhalb des Behälters 6 oder in oder an dessen Wand angeordnet sein.

In der vorliegenden Ausführung des Geräts sind insgesamt vier Pumpen vorgesehen:
- Eine erste Pumpe 14 dient dazu, Prozesswasser aus dem Abwassertank 6 in die Abwasserleitung 5 zu fördern.
- Eine zweite Pumpe 15 ist zwischen dem Ablaufbereich des Bottichs 1 und dem Abwassertank 6 angeordnet. Sie dient dazu, Prozesswasser aus dem Bottich 1 in den Abwassertank 6 zu fördern.
- Optional ist eine dritte Pumpe 16 zwischen dem Ablaufbereich des Bottichs und einer Bypass-Leitung 17 angeordnet. Die Bypass-Leitung 17 führt am Abwassertank 6 vorbei zur Abwasserleitung 5, so dass die dritte Pumpe 16 dazu verendet werden kann, Prozesswasser vom Bottich 1 unter Umgehung des Abwassertanks 6 direkt zur Abwasserleitung 5 zu fördern.
- Die vierte Pumpe ist die bereits erwähnte Zirkulationspumpe 13.

Wie aus Fig. 1 ersichtlich, sind weiter zwei Entlüftungsleitungen vorgesehen. Dabei handelt es sich um Leitungen, die nach oben über das höchste Wasserstandsniveau geführt werden und dort mit der Umgebungsluft kommunizieren. Eine erste Entlüftungsleitung 18 ist am Abwassertank 6 angeordnet. Sie erlaubt es, den Abwassertank zu entleeren, insbesondere durch Abfördern des Prozesswassers mithilfe der ersten Pumpe 14. Eine zweite Entlüftungsleitung 19 ist in an sich bekannter Weise an der Abwasserleitung 5 angeordnet.

Weiter sind am gezeigten Ausführungsbeispiel verschiedene Temperatursensoren vorgesehen. Ein erster Temperatursensor 20 ist am Bottich 1 oder am Sumpf 1a angeordnet und kann dazu verwendet werden, im Waschprozess die Temperatur des Prozesswassers zu messen. Mindestens ein zweiter Temperatursensor 21 ist an der Wärmepumpe angeordnet, d.h. am Kreislauf derselben, in thermischem Kontakt mit dem Wärmepumpenmedium, beispielsweise am Ausgang des Kondensators 8.

### Betrieb:

Die Funktionsweise des Geräts während eines Waschprozesses, d.h. einem Zyklus zum Waschen einer Wäschecharge, ist wie folgt:
1. Der Prozess beginnt in der Regel mit gefülltem Abwassertank 6. Das Wasser im Abwassertank 6 stammt z.B. aus einem früheren Waschprozess. Es befindet sich u.U. schon längere Zeit im Abwassertank 6 und besitzt z.B. ungefähr Zimmertemperatur.
2. Zu Beginn wird über das Frischwasserventil 3 Frischwasser für den Hauptwaschgang eingelassen, z.B. 20 bis 25 Liter für 8 kg Wäsche. Unter Normbedingungen besitzt dieses Frischwasser z.B. eine Temperatur von 15°C.
3. Gleichzeitig wird die Wärmepumpe gestartet, mit dem Ziel, Wärmeenergie aus dem Abwassertank 6 zu entziehen und dem Prozesswasser im Bottich 1 zuzuführen. Die Wärmepumpe wird erst ausgeschaltet, wenn das Prozesswasser im Abwassertank 6 zu vereisen droht, oder wenn die Temperatur des Prozesswassers im Bottich die gewünschte Betriebstemperatur erreicht hat, je nachdem, was zuerst eintritt. Die Temperatur des Prozesswassers wird dabei mit dem ersten Temperatursensor 20 gemessen. Erreicht die Temperatur im Bottich 1 bzw. im Prozesswasser die Betriebstemperatur (je nach Programm z.B. zwischen 20, 30, 40, 60 oder 95°C) nicht, so kann zusätzlich mit der elektrischen Heizung 2 geheizt werden, entweder gleichzeitig mit oder nach dem Heizen mittels Wärmepumpe. Mit dem so aufgewärmten Prozesswasser wird die Wäsche gewaschen.
4. Nachdem die Wärmepumpe nicht mehr benötigt wird und während die Wäsche gewaschen wird, kann das verbleibende flüssige Prozesswasser im Abwassertank 6 durch Betreiben der ersten Pumpe 14 in die Abwasserleitung 5 gefördert werden. Die zweite Pumpe 15 ist dabei ausgeschaltet, so dass der Abwassertank 6 vom flüssigen Prozesswasser entleert wird.
5. Gegen Ende des Hauptwaschgangs wird die zweite Pumpe 15 in Betrieb gesetzt. Dadurch gelangt warmes Prozesswasser aus dem Bottich 1 in den Abwassertank 6 und trifft auf das dort verbleibende Eis. Das Eis wird dabei angeschmolzen oder ganz geschmolzen.
6. Über Frischwasserventil 3 wird neues Frischwasser (z.B. 15 bis 20 Liter) für eine Spülphase eingelassen.
7. Optional kann nun die Wärmepumpe wieder in Gang gesetzt werden, um die Wärme vom Abwassertank 6 in das Prozesswasser im Bottich 1 zu fördern. Wiederum kann dabei das Prozesswasser im Abwassertank 6 teilweise gefroren werden.
8. Das Wasser aus dem Bottich 1 wird wiederum abgepumpt und kann optional zum Enteisen des Abwassertanks 6 verwendet werden.
9. Über Frischwasserventil 3 wird neues Frischwasser (z.B. 15 bis 20 Liter) für eine Veredlungsphase (optional) eingelassen.
10. Die Wärmepumpe kann optional wieder in Gang gesetzt werden, um die Wärme vom Abwassertank 6 in das Prozesswasser im Bottich 1 zu fördern.
11. Das Wasser aus dem Bottich 1 wird wiederum abgepumpt und kann nötigenfalls dazu verwendet werden, den Abwassertank 6 zu enteisen.
12. Während einer Schleuderphase (Zentrifugierphase) wird der Wäsche durch Zentrifugieren Wasser entzogen. Da dabei relativ schnell eine grössere Wassermenge anfällt, welche rasch abtransportiert werden muss, erfolgt in dieser Zeit die Entleerung des Bottichs vorzugsweise zumindest teilweise über die dritte Pumpe 16 und die Bypass-Leitung 17.

Wie sich aus dem Obigen ergibt, kann somit das Prozesswasser mit der Wärmepumpe geheizt werden, indem das Prozesswasser im Abwassertank teilweise gefroren wird. Zunächst wird dem Prozesswasser im Abwassertank somit die thermische Energie entzogen, die sich durch das Abkühlen des Wassers von seiner Starttemperatur auf ca. 0°C ergibt, und sodann kann auch noch die latente Wärme genutzt werden, die beim teilweisen Gefrieren des Wassers frei wird.

Während dem Betrieb der Wärmepumpe dient das Signal des zweiten Temperatursensors 21 dazu, ein Überhitzen der Wärmepumpe zu vermeiden. Hierzu prüft die Steuerung 4 dieses Signal und setzt die Wärmepumpe ausser Betrieb, wenn die Temperatur irgendwo im Wärmepumpenkreislauf zu hoch zu werden droht.

### Beschränkung der Wärmepumpen-Laufzeit

Wie erwähnt, ist die Steuerung 4 dazu ausgestaltet, die Laufzeit der Wärmepumpe während eines Waschprozesses oder einer Kühlphase, insbesondere während des Hauptwaschgangs (obiger Schritt 3), so zu beschränken, dass ein vollständiges Vereisen des Abwassertanks 6 vermieden wird. Hierzu bestimmt die Steuerung 4 die Umgebungstemperatur Tᵤ des Geräts.

Zu diesem Zweck kann das Gerät an seiner Aussenseite mit einem speziellen Umgebungstemperatursensor ausgerüstet werden, der die Umgebungstemperatur möglichst direkt und unabhängig von der Gerätetemperatur erfassen kann. Da dies apparativ jedoch etwas aufwändig ist, verwendet die Steuerung vorzugsweise einen der anderen, sowieso im Gerät vorgesehenen Temperatursensoren, so z.B. einer der Sensoren 20 oder 21, zur Ermittlung der Umgebungstemperatur Tᵤ.

Damit die Umgebungstemperatur Tᵤ genau bestimmt werden kann, ist dabei zu berücksichtigen, dass sich das Gerät während dem Waschprozess aufwärmt. Vorzugsweise wird deshalb die Messung, aus welcher die Umgebungstemperatur Tᵤ bestimmt wird, vor dem Waschprozess durchgeführt. Zu diesem Zweck weist die Steuerung 4 einen Speicher 23 auf, in welchem sie die Umgebungstemperatur vor dem Waschprozess speichert, um diese sodann während dem Waschprozess zum Bestimmen der Laufzeit der Wärmepumpe einzusetzen.

Ist die Standzeit des Geräts zwischen zwei Waschprozessen kurz, kann es sich dabei nicht auf die Umgebungstemperatur abkühlen. Um auch in solchen Fällen die Umgebungstemperatur Tᵤ gut bestimmen zu können, können vor dem Waschprozess auch mehrere Temperaturmessungen zu unterschiedlichen Zeiten durchgeführt werden. Der Abfall der so gemessenen Temperaturwerte hängt von der momentanen Gerätetemperatur und der Umgebungstemperatur Tᵤ ab, so dass mit einem geeigneten Extrapolationsverfahren, z.B. mittels Kurvenanpassung oder aus der momentanen Temperatur und der Temperaturzerfallrate, die Umgebungstemperatur Tᵤ abgeschätzt werden kann.

Die maximale Laufzeit tₘₐₓ der Wärmepumpe kann bei zunehmender Umgebungstemperatur Tᵤ zunehmend grösser gewählt werden, da das Risiko einer vollständigen Vereisung des Abwassertanks 4 sinkt. Beispielsweise kann in einer Haushaltswaschmaschine mit einem Volumen des Abwassertanks 4 von sechs Litern bei einer Umgebungstemperatur von mehr als etwa 6°C die Wärmepumpe ohne weiteres mehr als eine Stunde lang betrieben werden, ohne dass es zu einer vollständigen Vereisung des Abwassertanks 4 kommt, so dass das Prozesswasser alleine mit der Wärmepumpe auf die notwendige Betriebstemperatur gebracht werden kann, selbst wenn die Betriebstemperatur relativ hoch liegt. Andererseits beträgt bei einer Umgebungstemperatur unterhalb ca. 3°C die maximale Laufzeit typisch weniger als 45 Minuten, weshalb die Wärmepumpe unter Umständen gestoppt werden muss, bevor das Prozesswasser die gewünschte Betriebstemperatur erreicht hat. In diesem Fall muss zusätzlich mit der Heizung 2 geheizt werden.

### Bemerkungen:

Die Erfindung eignet sich grundsätzlich auch für den Einsatz in grossgewerblichen Geräten, wie z.B. in Restaurations- oder Hotelbetrieben, aber insbesondere in Haushaltgeräten, im letzteren Fall sowohl in Mehrfamilienhäusern als auch in Einfamilienhäusern oder Wohnungen.

Grundsätzlich sind beliebige Abhängigkeiten zwischen der maximalen Laufzeit tₘₐₓ der Wärmepumpe und der Umgebungstemperatur Tᵤ denkbar, vorzugsweise wird jedoch aus den oben erwähnten Gründen bei tiefer Umgebungstemperatur Tᵤ die maximale Laufzeit tₘₐₓ reduziert. Durch Verwendung einer von der Umgebungstemperatur abhängigen maximalen Laufzeit der Wärmepumpe kann bei höheren Umgebungstemperaturen dem Abwassertank mehr Energie entzogen werden, da die maximale Laufzeit nicht auf den ungünstigsten, d.h. kältesten, Fall ausgelegt werden muss.

Wie erwähnt, kann die Umgebungstemperatur mit einem Temperatursensor 20, 21 gemessen werden, der im Waschprozess anderen Zwecken dient. In diesem Fall ist die Steuerung 4 so ausgestaltet, dass sie anhand des Betriebszustands des Geräts erkennt, wann bzw. ob jeweils eine Messung der Umgebungstemperatur möglich ist.

Das Gerät kann mit der Wärmepumpe sowie auch konventionell betrieben werden. Hierzu werden dem Benutzer in an sich bekannter Weise unterschiedliche Programmoptionen zur Verfügung gestellt. Wählt der Benutzer eine der im Obigen beschriebenen Funktionsweisen aus, so führt die Steuerung 4 die hierzu notwendigen Schritte aus, wozu sie in geeigneter Weise, z.B. durch Mikroprogrammierung und/oder geeignete Logikschaltungen, ausgestaltet ist.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Reinigungsgerät, insbesondere Waschmaschine oder Geschirrspüler, zum Reinigen eines zu reinigenden Guts mittels Prozesswasser in einem Waschprozess, mit
einem Bottich (1) zur Aufnahme des zu reinigenden Guts,
einem Abwassertank (6) zum Zwischenspeichern von Abwasser aus dem Bottich (1),
einer Wärmepumpe (7 - 10), um dem Abwassertank (6) Wärme zu entziehen und dem Prozesswasser im Bottich (1) zuzuführen,
einem Temperatursensor (20, 21) zum Messen einer Temperatur und
einer Steuerung (4) zum Steuern des Reinigungsgeräts, wobei die Steuerung (4) dazu ausgestaltet ist, die Wärmepumpe (7 -10) derart zu steuern, dass dem Abwassertank (6) mit der Wärmepumpe (7 -10) so lange Wärme entzogen wird, dass ein Teil des Prozesswassers im Abwassertank (6) gefriert, wobei eine maximale Laufzeit der Wärmepumpe abhängig von der vom Temperatursensor (20, 21) gemessenen Temperatur ist,
**dadurch gekennzeichnet, dass** die Steuerung (4) dazu ausgestaltet ist, mit dem Temperatursensor (20, 21) eine Umgebungstemperatur zu bestimmen, aus der Umgebungstemperatur eine maximale Laufzeit der Wärmepumpe zu ermitteln und die Laufzeit der Wärmepumpe während des Waschprozesses auf die maximale Laufzeit zu beschränken, wobei am oder im Abwassertank (6) kein Temperatursensor angeordnet ist.

2. Reinigungsgerät nach Anspruch 1, wobei die Steuerung (4) dazu ausgestaltet ist, vor dem Waschprozess mindestens eine Temperatur, insbesondere mehrere Temperaturen zu unterschiedlichen Zeiten, zu messen und hieraus die Umgebungstemperatur abzuleiten.

3. Reinigungsgerät nach Anspruch 2, wobei die Steuerung (4) einen Speicher (23) aufweist, um die Umgebungstemperatur zu speichern.

4. Reinigungsgerät nach einem der vorangehenden Ansprüche mit einem unterhalb am Bottich (1) angeordneten Sumpf (1a) zum Sammeln von Prozesswasser, wobei der Temperatursensor (20) am Bottich (1) oder am Sumpf (1a) angeordnet ist.

5. Reinigungsgerät nach Anspruch 4, wobei die Steuerung (4) dazu ausgestaltet ist, während dem Waschprozess die Temperatur des Prozesswassers mit einem Signal des Temperatursensors (20) zu messen, um das Prozesswasser im Bottich (1) auf eine Betriebstemperatur zu erwärmen.

6. Reinigungsgerät nach einem der Ansprüche 1 bis 5, wobei der Temperatursensor (21) an der Wärmepumpe (7 - 10) angeordnet ist.

7. Reinigungsgerät nach Anspruch 6, wobei die Steuerung (4) dazu ausgestaltet ist, mit einem Signal des Temperatursensors (21) während dem Waschprozess ein Überhitzen der Wärmepumpe (7 - 10) zu vermeiden.

8. Reinigungsgerät nach einem der vorangehenden Ansprüche, wobei die Steuerung dazu ausgestaltet ist, bei tieferer Umgebungstemperatur die maximale Laufzeit kleiner zu wählen als bei höherer Umgebungstemperatur.

9. Reinigungsgerät nach einem der vorangehenden Ansprüche, wobei die Steuerung dazu ausgestaltet ist, die Laufzeit der Wärmepumpe abhängig davon festzulegen, wann das Prozesswasser eine Betriebstemperatur erreicht hat, soweit vorher nicht die aus der Umgebungstemperatur ermittelte maximale Laufzeit der Wärmepumpe erreicht wird.

10. Reinigungsgerät nach einem der vorangehenden Ansprüche, wobei die Steuerung (4) dazu ausgestaltet ist,
- bei einer Umgebungstemperatur oberhalb einer Schwelltemperatur die Laufzeit der Wärmepumpe abhängig davon festzulegen, wann das Prozesswasser eine Betriebstemperatur erreicht hat, und
- bei einer Umgebungstemperatur unterhalb der Schwelltemperatur die Laufzeit der Wärmepumpe durch die maximale Laufzeit zu beschränken.

11. Reinigungsgerät nach Anspruch 10, wobei die Schwelltemperatur zwischen 3 und 6 °C liegt, insbesondere zwischen 4 und 5 °C.

12. Reinigungsgerät nach einem der vorangehenden Ansprüche, wobei die Steuerung dazu ausgestaltet ist, im Waschprozess mindestens einen Teil des im Abwassertank (6) befindlichen Eises durch Zuführen von Prozesswasser aus dem Bottich (1) zu schmelzen, und insbesondere wobei die Steuerung (4) dazu ausgestaltet ist, in einer Prozessphase Prozesswasser im Bottich (1) mit der Wärmepumpe (7 - 10) zu erwärmen und dabei das Abwasser im Abwassertank (6) teilweise zu gefrieren, sodann noch nicht gefrorenes Abwasser aus dem Abwassertank (6) abzulassen, sodann, später der Prozessphase, erwärmtes Prozesswasser aus dem Bottich (1) in den Abwassertank (6) zu führen, um dort gefrorenes Abwasser zu schmelzen.

13. Verfahren zur Steuerung eines Reinigungsgeräts nach einem der vorangehenden Ansprüche, umfassend die Schritte
Ermitteln einer Umgebungstemperatur,
Ermitteln der maximalen Laufzeit der Wärmepumpe abhängig von der Umgebungstemperatur,
Entzug von Wärme aus dem Abwassertank (6) mittels der Wärmepumpe während einer Zeitdauer des Waschprozesses, wobei diese Zeitdauer von der maximalen Laufzeit beschränkt wird,
wobei am oder im Abwassertank (6) kein Temperatursensor angeordnet ist.

14. Verfahren nach Anspruch 13, wobei das Ermitteln der Umgebungstemperatur vor dem Waschprozess stattfindet, und insbesondere wobei mehrere Temperaturen zu unterschiedlichen Zeiten gemessen werden.

## Claims

1. Cleaning device, particularly a washing machine or dishwasher, for cleaning a product to be cleaned by means of process water in a washing process, with
a vat (1) for receiving the product to be cleaned,
a waste water container (6) for temporarily storing waste water from the vat (1),
a heat pump (7 - 10) for extracting heat from the waste water container (6) and for adding it to the process water in the vat (1),
a temperature sensor (20, 21) for measuring a temperature and
a controller (4) for controlling the cleaning device, the controller (4) being adapted to control the heat pump (7 - 10) in such a way that heat is extracted from the waste water container (6) by the heat pump (7 - 10) until a part of the process water freezes inside the waste water container (6), wherein a maximum operating time of the heat pump depends on the temperature measured by the temperature sensor (20, 21),
**characterized in that** the controller (4) is adapted to determine an ambient temperature with the temperature sensor (20, 21), to determine a maximum operating time of the heat pump based on the ambient temperature and to limit the operating time of the heat pump during the washing process to the maximum operating time, wherein no temperature sensor is arranged at or inside the waste water container (6).

2. Cleaning device according to claim 1, wherein the controller (4) is adapted to measure at least a temperature before the washing process, particularly a plurality of temperatures at different times, and to derive the ambient temperature from this measure.

3. Cleaning device according to claim 2, wherein the controller (4) has a memory (23) for recording the ambient temperature.

4. Cleaning device according to one of the preceding claims, with a sump (1a) arranged underneath the vat (1) for collecting process water, wherein the temperature sensor (20) is arranged at the vat (1) or at the sump (1a).

5. Cleaning device according to claim 4, wherein the controller (4) is adapted to measure the process water temperature by means of a signal of the temperature sensor (20) during the washing process, in order to heat up the process water inside the vat (1) to an operating temperature.

6. Cleaning device according to one of the claims 1 to 5, wherein the temperature sensor (21) is arranged at the heat pump (7 - 10).

7. Cleaning device according to claim 6, wherein the controller (4) is adapted to avoid an overheating of the heat pump (7 - 10) during the cleaning process by means of a signal of the temperature sensor (21).

8. Cleaning device according to one of the preceding claims, wherein the controller is adapted to choose the maximum operating time shorter in case of a lower ambient temperature than in case of a higher ambient temperature.

9. Cleaning device according to one of the preceding claims, wherein the controller is adapted to set the operating time of the heat pump depending on the instant when the process water has reached an operating temperature if the maximum operating time of the heat pump, determined by means of the ambient temperature, has not been reached before.

10. Cleaning device according to one of the preceding claims, wherein the controller (4) is adapted to
- determine the operating time of the heat pump depending on the instant when the process water has reached an operating temperature in case the ambient temperature is higher than a threshold temperature, and
- limit the operating time of the heat pump at the maximum operating time in case an ambient temperature is lower than the threshold temperature.

11. Cleaning device according to claim 10, wherein the threshold temperature is between 3 and 6 °C, particularly between 4 and 5 °C.

12. Cleaning device according to one of the preceding claims, wherein the controller is adapted to melt at least a part of the ice located inside the waste water container (6) during the washing process, by supplying process water from the vat (1), and particularly wherein the controller (4) is adapted to heat up process water inside the vat (1) by means of the heat pump (7 - 10) in a process phase and at the same time to partially freeze the waste water inside the waste water container (6), subsequently to dispose of not yet frozen waste water from the waste water container (6), thereafter, later during the process phase, to guide heated process water from the vat (1) into the waste water container (6) in order to melt frozen water located therein.

13. Method for controlling a cleaning device according to one of the preceding claims, comprising the steps of
determining an ambient temperature,
determining the maximum operating time of the heat pump depending on the ambient temperature,
extract heat from the waste water container (6) by means of the heat pump during a duration of the cleaning process, wherein this duration is limited by the maximum operating time,
wherein no temperature sensor is arranged at or inside the waste water container (6).

14. Method according to claim 13, wherein the determination of the maximum ambient temperature is carried out before the washing process, and particularly wherein a plurality of temperatures are measured at different instants.

## Revendications

1. Dispositif de nettoyage, particulièrement une machine à laver ou lave-vaisselle, pour nettoyer un produit à nettoyer avec de l'eau de processus dans un processus de lavage, avec
une cuve (1) pour recevoir le produit à nettoyer,
un récipient d'eau résiduelle (6) pour contenir provisoirement de l'eau résiduelle de la cuve (1),
une pompe à chaleur (7 - 10) pour retirer de la chaleur du récipient d'eau résiduelle (6) et l'alimenter dans l'eau de processus dans la cuve (1),
un capteur de température (20, 21) pour mesurer une température et
une commande (4) pour commander le dispositif de nettoyage, la commande (4) étant adaptée à commander la pompe à chaleur (7 - 10) de sorte que de la chaleur est retirée du récipient d'eau résiduelle (6) par la pompe à chaleur (7 - 10) jusqu'à ce qu'une partie de l'eau de processus gèle dans le récipient d'eau résiduelle (6), une durée maximale de fonctionnement de la pompe à chaleur étant dépendante de la température mesurée par le capteur de température (20, 21),
**caractérisé en ce que** la commande (4) est adaptée à déterminer une température ambiante avec le capteur de température (20, 21), de déterminer une durée de fonctionnement maximale de la pompe à chaleur à la base de la température ambiante et de limiter la durée de fonctionnement de la pompe à chaleur pendant le processus de lavage à la durée de fonctionnement maximale, aucun capteur de température étant arrangé au ou à l'intérieur du récipient d'eau résiduelle (6).

2. Dispositif de nettoyage selon la revendication 1, la commande (4) étant adaptée à mesurer au moins une température avant le processus de lavage, particulièrement une pluralité de températures à plusieurs instants, et de dériver la température ambiante à partir de cette mesure.

3. Dispositif de nettoyage selon la revendication 2, la commande (4) ayant une mémoire (23) pour enregistrer la température ambiante.

4. Dispositif de nettoyage selon l'une des revendications précédentes, avec un puisard (1a) arrangé au-dessous de la cuve (1) pour collectionner de l'eau de processus, le capteur de température (20) étant arrangé à la cuve (1) ou au puisard (1a).

5. Dispositif de nettoyage selon la revendication 4, la commande (4) étant adaptée à mesurer la température de l'eau de processus à l'aide d'un signal du capteur de température (20) pendant le processus de lavage, afin de chauffer l'eau de processus dans la cuve (1) à une température d'opération.

6. Dispositif de nettoyage selon l'une des revendications 1 à 5, le capteur de température (21) étant arrangé à la pompe à chaleur (7 - 10).

7. Dispositif de nettoyage selon la revendication 6, la commande (4) étant adaptée à éviter une surchauffe de la pompe à chaleur (7 - 10) pendant le processus de lavage à l'aide d'un signal du capteur de température (21).

8. Dispositif de lavage selon l'une des revendications précédentes, la commande étant adaptée à choisir la durée de fonctionnement maximale plus courte en cas d'une plus basse température ambiante qu'en cas d'une plus haute température ambiante.

9. Dispositif de nettoyage selon l'une des revendications précédentes, la commande étant adaptée de fixer la durée de fonctionnement de la pompe à chaleur en fonction de l'instant quand l'eau de processus a atteint une température d'opération, si la durée de fonctionnement maximale de la pompe à chaleur, déterminée à l'aide de la température ambiante, n'a pas été atteinte auparavant.

10. Dispositif de nettoyage selon l'une des revendications précédentes, la commande (4) étant adaptée
- à déterminer la durée de fonctionnement de la pompe à chaleur en fonction de l'instant quand l'eau de processus a atteint une température d'opération en cas d'une température ambiante supérieure à une température de seuil, et
- à limiter la durée de fonctionnement de la pompe à chaleur par la durée de fonctionnement maximale en cas d'une température ambiante inférieure à la température de seuil.

11. Dispositif de nettoyage selon la revendication 10, la température de seuil étant comprise entre 3 et 6 °C, particulièrement comprise entre 4 et 5 °C.

12. Dispositif de nettoyage selon l'une des revendications précédentes, la commande étant adaptée à fondre au moins une partie de la glace située dans le récipient d'eau résiduelle (6) pendant le processus de lavage en alimentant de l'eau de processus de la cuve (1), et particulièrement la commande (4) étant adaptée à chauffer de l'eau de processus dans la cuve (1) à l'aide de la pompe à chaleur (7 - 10) pendant une phase de processus et au même temps de partiellement geler l'eau résiduelle dans le récipient d'eau résiduelle (6), ensuite d'évacuer de l'eau résiduelle non encore gelée du récipient d'eau résiduelle, ensuite, plus tard dans la phase de processus, de guider de l'eau de processus chauffée de la cuve (1) dans le récipient d'eau résiduelle (6) afin de fondre de l'eau gelée situé là-bas.

13. Procédé de commande d'un dispositif de nettoyage selon l'une des revendications précédentes, comprenant les étapes
de déterminer une température ambiante,
de déterminer la durée de fonctionnement maximale de la pompe à chaleur en fonction de la température ambiante,
de retirer de la chaleur du récipient d'eau résiduelle (6) à l'aide de la pompe à chaleur pendant une durée du processus de lavage, cette durée étant limitée par la durée de fonctionnement maximale,
aucun capteur de température étant arrangé au ou à l'intérieur du récipient d'eau résiduelle (6).

14. Procédé selon la revendication 13, la détermination de la température ambiante se déroulant avant le processus de lavage, et particulièrement une pluralité de températures étant mesurées à des différents instants.
